(19) Europäisches Patentamt
European Patent Office
Office européen des brevets

(11) **EP 3 268 325 B1**

(12) **EUROPÄISCHE PATENTSCHRIFT**

(45) Veröffentlichungstag und Bekanntmachung des Hinweises auf die Patenterteilung:
**06.05.2020 Patentblatt 2020/19**

(21) Anmeldenummer: **16706569.7**

(22) Anmeldetag: **19.02.2016**

(51) Int Cl.:
*C04B 24/42* (2006.01)     *C04B 28/02* (2006.01)
*C04B 28/14* (2006.01)     *C07F 7/18* (2006.01)
*C04B 103/65* (2006.01)     *C04B 103/00* (2006.01)
*C04B 111/27* (2006.01)

(86) Internationale Anmeldenummer:
**PCT/EP2016/053603**

(87) Internationale Veröffentlichungsnummer:
**WO 2016/142155 (15.09.2016 Gazette 2016/37)**

(54) **VERFAHREN ZUR HERSTELLUNG VON PULVERFÖRMIGEN FESTSTOFFEN AUS ALKALISALZEN VON SILANOLEN**

METHOD FOR PRODUCING PULVERULENT SOLIDS FROM ALKALI SALTS OF SILANOLS

PROCÉDÉ DE FABRICATION DE MATIÈRES SOLIDES PULVÉRULENTES À PARTIR DE SELS ALCALINS DE SILANOLS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.03.2015   DE 102015204263**

(43) Veröffentlichungstag der Anmeldung:
**17.01.2018   Patentblatt 2018/03**

(73) Patentinhaber: **Wacker Chemie AG**
**81737 München (DE)**

(72) Erfinder:
• **STEPP, Michael**
**5122 Überackern (AT)**
• **SCHILDBACH, Daniel**
**97264 Helmstadt (DE)**

(74) Vertreter: **Fritz, Helmut et al**
**Wacker Chemie AG**
**Zentralbereich Patente, Marken und Lizenzen**
**Hanns-Seidel-Platz 4**
**81737 München (DE)**

(56) Entgegenhaltungen:
WO-A1-2013/174689     WO-A1-2015/176977
DE-A1-102011 076 303     DE-A1-102011 076 344

EP 3 268 325 B1

**Beschreibung**

Die Erfindung betrifft ein Verfahren zur Herstellung von pulverförmigen Feststoffen, die Alkaliorganosiliconate umfassen zur Hydrophobierung von Baustoffen.

Die Alkaliorganosiliconate werden auch als Alkalisalze von Organokieselsäuren bezeichnet.

Alkaliorganosiliconate wie Kaliummethylsiliconat werden schon seit Jahrzehnten zur Hydrophobierung, insbesondere von mineralischen Baustoffen eingesetzt. Sie lassen sich aufgrund ihrer guten Wasserlöslichkeit als wässrige Lösung auf Feststoffen applizieren, wo sie nach Verdampfen des Wassers unter dem Einfluss pH-Wert verändernder Effekte, wie z.B. der Reaktion mit Kohlendioxid festhaftende, dauerhaft wasserabweisende Oberflächen bilden. Da sie praktisch keine hydrolytisch abspaltbaren organischen Reste enthalten, erfolgt die Aushärtung vorteilhafterweise ohne Freisetzung unerwünschter flüchtiger, organischer Nebenprodukte.

Die Herstellung von Alkaliorganosiliconaten insbesondere Kalium- bzw. Natriummethylsiliconaten wurde vielfach beschrieben. In den meisten Fällen steht dabei die Herstellung von anwendungsfertigen und lagerstabilen, wässrigen Lösungen im Vordergrund.

In US 2803561 wird Alkyltrichlorsilan hydrolysiert zur entsprechenden Alkylkieselsäure, diese wird anschließend mit Alkalihydroxid umgesetzt zu einer wässrigen Lösung von AlkaliSiliconat, welche durch Zusatz von Alkohol oder Keton stabilisiert wird.

Dagegen kann bei dem in DE 4336600 beschriebenen kontinuierlichen Verfahren ausgehend von Organotrichlorsilanen über das Zwischenprodukt Organotrialkoxysilan, welches letztlich mit Alkalilauge umgesetzt wird, die aufwendige Isolierung und Reinigung des Feststoffs umgangen werden. Vorteilhaft ist dabei, dass die gebildeten Nebenprodukte Chlorwasserstoff und Alkohol zurückgewonnen werden und die gebildete Siliconat-Lösung praktisch chlorfrei ist.

Anwendungsfertige Baustoffmischungen wie Zement- oder Gipsputze und -spachtelmassen oder Fliesenkleber werden hauptsächlich als Pulver in Säcken oder Silos auf die Baustelle geliefert und erst dort mit dem Anmachwasser angerührt. Dafür wird ein festes Hydrophobiermittel benötigt, das der anwendungsfertigen Trockenmischung zugefügt werden kann und erst bei Zusatz von Wasser während der Applikation vor Ort, z.B. auf der Baustelle, in kurzer Zeit seine hydrophobierende Wirkung entfaltet. Dies nennt man Dry-Mix-Anwendung. Organosiliconate in fester Form haben sich als sehr effiziente Hydrophobieradditive dafür bewährt. Trotzdem wurden bislang nur wenige technisch praktikable Verfahren zu ihrer Herstellung veröffentlicht.

In WO2013/174689 ist die Herstellung von festen Alkaliorganosiliconaten aus ihren wässrigen Lösungen mit Hilfe einer inerten Flüssigkeit (azeotroper Schlepper) beschrieben. Nachteilig ist dabei die große Menge an zündfähigem Hilfsstoff, die mitverdampft und im Kreis gefahren wird, was sehr anlagen- und sicherheitstechnisch aufwendig ist und Emissionen bedingt. Außerdem muss zur Isolierung des Feststoffs diese Flüssigkeit zeit- und energieaufwendig wieder entfernt werden.

In der Patentliteratur sind direkte Trocknungsverfahren von wässrigen und/oder alkoholischen Lösungen beschrieben, die entweder auf einer aufwendigen Kristallisation (US 2438055) oder einer thermischen Belastung bei kurzer Verweilzeit (DE 1176137: 350 - 400°C, 2-3 Minuten) (US 2567110: 170°C "bis zur Gewichtskonstanz") beruhen. Nachteilig ist dabei die aufwendige technische Umsetzung und die Gefahr thermischer Zersetzung mit sehr hohem Energiepotenzial. In WO2013/041385 kann dieses Problem mit Hilfe eines zweistufigen Verfahrens zur Direkttrocknung von wässrig/alkoholischen Siliconat-Lösungen umgangen werden, jedoch werden dabei während des Trocknungsprozesses zähe Zwischenzustände durchlaufen, die hohe technische Anforderungen an den Trockner stellen. Auch die Trocknung in einem Pulverbett aus bereits getrocknetem Siliconat wurde beschrieben (WO2013/075969), was jedoch ebenfalls technisch anspruchsvoll und zeitaufwendig ist, und der begrenzten thermischen Stabilität der Alkalisiliconate zuwiderläuft.

Gegenstand der Erfindung ist ein Verfahren zur Herstellung von pulverförmigen Feststoffen (F), die Alkaliorganosiliconate umfassen, bei dem das Wasser aus wässrigen Lösungen von Alkaliorganosiliconaten mit einem Molverhältnis von Alkali zu Silicium von 0,1 bis 3, einem Gehalt an Alkoholen von weniger als 0,02 Gew.-% und einem Gehalt an Halogenidanionen von maximal 1 Gew.-% durch Sprühtrocknung entfernt wird.

Durch die Entfernung des Wassers aus den wässrigen Lösungen fallen die festen Alkaliorganosiliconate direkt als sehr gut rieselfähige Pulver (F) an. Überraschend war, dass trotz der im Stand der Technik beschriebenen zähen Zwischenstufen beim Trocknen von Siliconat-Lösungen eine Sprühtrocknung zum Ziel führte. Außerdem wurde gefunden, dass die erfindungsgemäß getrockneten festen Alkalisiliconate gegenüber den nach dem Stand der Technik hergestellten Alkalisiliconat-Pulvern ein deutlich geringer ausgeprägtes hygroskopisches Verhalten zeigen, was sich anhand der prozentualen Gewichtszunahme bei Lagerung unter definierten Bedingungen (Feuchtigkeit, Temperatur) leicht ermitteln lässt.

Bei dem Verfahren ist ein einfaches und vollständiges Recycling des bei der Herstellung der Alkaliorganosiliconate im Hydrolyseschritt entstehenden Spaltproduktes - vorzugsweise Alkohol oder Halogenwasserstoff- möglich. Wie beispielsweise WO 12022544 zu entnehmen ist, sind aufgrund der thermischen Instabilität der wässrigen Siliconat-Lösungen lange Trocknungszeiten bei hohen Temperaturen zu vermeiden. Aufgrund der sehr kurzen thermischen Belastung ist das schonende Sprühtrocknungsverfahren dafür besonders gut geeignet.

Vorzugsweise beträgt in den wässrigen Lösungen der Alkaliorganosiliconate das Molverhältnis von Alkali zu Silicium mindestens 0,3, insbesondere mindestens 0,5 und höchstens 2, insbesondere höchstens 1,2. Vorzugsweise beträgt in den wässrigen Lösungen der Alkaliorganosiliconate der Gehalt an Alkoholen weniger als 0,01 Gew.-%. Vorzugsweise beträgt in den wässrigen Lösungen der Alkaliorganosiliconate der Gehalt an Halogenidanionen maximal 0,3 Gew.-%, besonders bevorzugt maximal 0,1 Gew.-%, insbesondere maximal 0,01 Gew.-%.

Die wässrigen Lösungen der Alkaliorganosiliconate sind in vielen Fällen kommerziell erhältlich und sind hergestellt nach bekannten Methoden durch Reaktion von einem oder mehreren Organosilanen der allgemeinen Formel 1

$$(R^1)_a Si(Y)_b (-Si(R^2)_{3-c}(Y)_c)_d \qquad (1)$$

oder deren Hydrolyse/Kondensationsprodukten, oder durch Reaktion der Organosilane der allgemeinen Formel 1 zusammen mit deren Hydrolyse/Kondensationsprodukten,
mit Wasser und basischem Alkalisalz und Entfernung der freigesetzten Spaltprodukte **HY,**
wobei
$R^1$, $R^2$ jeweils einen Methylrest,
**Y** Wasserstoff, F, Cl, Br oder O$R^4$
$R^4$ Methyl-, Ethyl-, 1-Propyl- oder 2-Propylgruppe, bedeuten,
**a** die Werte 1, 2 oder 3 und
**b, c, d** die Werte 0, 1, 2 oder 3 bedeuten,
mit der Maßgabe, dass **b+c** $\geq$ 1 und **a+b+d** = 4,
wobei die Menge an basischem Alkalisalz so bemessen ist, dass auf ein Mol Silicium mindestens 0,1 Mol, besonders bevorzugt mindestens 0,3 Mol, insbesondere mindestens 0,5 Mol und höchstens 3 Mol, besonders bevorzugt höchstens 2 Mol, insbesondere höchstens 1,2 Mol Alkali-Kationen kommen.

Es können auch Gemische dieser Organosilane der allgemeinen Formel 1 oder gemischte Oligomere aus Verbindungen der allgemeinen Formel 1 eingesetzt werden, oder Gemische dieser gemischten oligomeren Siloxane mit monomeren Organosilanen der allgemeinen Formel 1. Gegebenenfalls vorhandene, durch Hydrolyse gebildete Silanolgruppen in den Verbindungen der allgemeinen Formel 1 oder deren Oligomeren stören dabei nicht.

Vorzugsweise bedeutet **d** den Wert 0. Vorzugsweise bedeutet höchstens bei 20 Mol-%, insbesondere bei höchstens 5 Mol-% der Verbindungen der allgemeinen Formel 1 **d** einen Wert 1, 2 oder 3.

Beispiele für Verbindungen der allgemeinen Formel 1, bei der a = 1 bedeutet, sind (insofern die Verbindung die allgemeine Formel 1 gemäß Anspruch 1 aufweist):
$MeSi(OMe)_3$, $MeSi(OEt)_3$, $MeSi(OMe)_2(OEt)$, $MeSi(OMe)(OEt)_2$, $MeSi(OCH_2CH_2OCH_3)_3$, $H_3C-CH_2-CH_2-Si(OMe)_3$, $(H_3C)_2CH-Si(OMe)_3$, $CH_3CH_2CH_2CH_2-Si(OMe)_3$, $(H_3C)_2CHCH_2-Si(OMe)_3$, $tBu-Si(OMe)_3$, $PhSi(OMe)_3$, $PhSi(OEt)_3$, $F_3C-CH_2-CH_2-Si(OMe)_3$, $H_2C=CH-Si(OMe)_3$, $H_2C=CH-Si(OEt)_3$, $H_2C=CH-CH_2-Si(OMe)_3$, $Cl-CH_2CH_2CH_2-Si(OMe)_3$, $n-Hex-Si(OMe)_3$, $cy-Hex-Si(OEt)_3$, $cy-Hex-CH_2-CH_2-Si(OMe)_3$, $H_2C=CH-(CH_2)_9-Si(OMe)_3$, $CH_3CH_2CH_2CH_2CH(CH_2CH_3)-CH_2-Si(OMe)_3$, $Hexadecyl-Si(OMe)_3$, $Cl-CH_2-Si(OMe)_3$, $H_2N-(CH_2)_3-Si(OEt)_3$, $cyHex-NH-(CH_2)_3-Si(OMe)_3$, $H_2N-(CH_2)_2-NH-(CH_2)_3-Si(OMe)_3$, $O(CH_2CH_2)N-CH_2-Si(OEt)_3$, $PhNH-CH_2-Si(OMe)_3$, $Hexadecyl-SiH_3$, $MeSi(OEt)_2H$, $PhSi(OEt)_2H$, $PhSi(OMe)_2H$, $MeSi(OEt)H_2$, $Propyl-Si(OMe)_2H$, $MeSiH_3$, $MeSi(OEt)(OMe)H$, $(MeO)_3Si-CH_2CH_2-Si(OMe)_3$, $(EtO)_3Si-CH_2CH_2-Si(OEt)_3$, $Cl_3Si-CH_2CH_2-SiMeCl_2$, $Cl_3Si-CH_2CH_2-SiCl_3$, $Cl_3Si-(CH_2)_6-SiCl_3$, $(MeO)_3SiSi(OMe)_2Me$, $MeSi(OEt)_2Si(OEt)_3$, $MeSiCl_2SiCl_3$, $Cl_3SiSiCl_3$, $HSiCl_2SiCl_2H$, $HSiCl_2SiCl_3$, $MeSiCl_3$, $MeSiCl_2H$, $H_2C=CH-SiCl_3$, $PhSiCl_3$, $F_3C-CH_2-CH_2-SiCl_3$, $Cl-CH_2CH_2CH_2-SiCl_3$, $MeSi(OMe)Cl_2$, $MeSi(OEt)ClH$, $EtSiBr_3$, $MeSiF_3$, $Cl-CH_2-SiCl_3$, $Cl_2CH-SiCl_3$, $MeSiCl(OMe)_2$, $MeSiCl(OEt)_2$, $MeSi(OMe)Cl_2$.

Bevorzugt sind $MeSi(OMe)_3$, $MeSi(OEt)_3$, $(H_3C)_2CHCH_2-Si(OMe)_3$ und $PhSi(OMe)_3$, wobei Methyltrimethoxysilan bzw. dessen Hydrolyse/Kondensationsprodukt bevorzugt ist.

Beispiele für Verbindungen der allgemeinen Formel 1, bei der **a** = 2 bedeutet, sind (insofern die Verbindung die allgemeine Formel 1 gemäß Anspruch 1 aufweist):
$Me_2Si(OMe)_2$, $Me_2Si(OEt)_2$, $Me_2Si(OCH(CH_3)_2)_2$, $MeSi(OMe)_2CH_2CH_2CH_3$, $Et_2Si(OMe)_2$, $Me_2Si(OCH_2CH_2OCH_3)_2$, $MeSi(OMe)_2Et$, $(H_3C)_2CH-Si(OMe)_2Me$, $Ph-Si(OMe)_2Me$, $t-Bu-Si(OMe)_2Me$, $Ph_2Si(OMe)_2$, $PhMeSi(OEt)_2$, $MeEt-Si(OMe)_2$, $Me_2Si(OMe)Cl$, $Me_2Si(OEt)Cl$, $F_3C-CH_2-CH_2-Si(OMe)_2Me$, $H_2C=CH-Si(OMe)_2Me$, $H_2C=CH-CH_2-Si(OMe)_2Me$, $Cl-CH_2CH_2CH_2-Si(OMe)_2Me$, $cy-Hex-Si(OMe)_2Me$, $n-Hex-Si(OMe)_2Me$, $cy-Hex-CH_2-CH_2-Si(OMe)_2Me$, $H_2C=CH-(CH_2)_9-Si(OMe)_2Me$, $Cl-CH_2-SiMe(OMe)_2$, $H_2N-(CH_2)_3-SiMe(OEt)_2$, $cyHex-NH-(CH_2)_3-SiMe(OMe)_2$, $H_2N-(CH_2)_2-NH-(CH_2)_3-SiMe(OMe)_2$, $O(CH_2CH_2)N-CH_2-SiMe(OMe)_2$, $PhNH-CH_2-Si-Me(OMe)_2$, $(MeO)_2MeSi-CH_2CH_2-SiMe(OMe)_2$, $(EtO)_2MeSi-CH_2CH_2-SiMe(OEt)_2$, $(MeO)_2MeSiSi(OMe)_2Me$, $Me-Si(OEt)_2SiMe(OEt)_2$, $Me_2Si(OMe)Si(OMe)_3$, $Me_2Si(OMe)Si(OMe)Me_2$, $Me_2Si(OMe)SiMe_3$, $Me_2Si(OMe)SiMe(OMe)_2$.

$Me_2SiCl_2$, $MeSiCl_2CH_2CH_2CH_3$, $Et_2SiCl_2$, $MeSiCl_2Et$, $(H_3C)_2CH-SiCl_2Me$, $Ph-SiCl_2Me$, $t-Bu-SiCl_2Me$, $Ph_2SiCl_2$, $PhMeSiCl_2$, $F_3C-CH_2-CH_2-SiCl_2Me$, $H_2C=CH-SiCl_2Me$, $H_2C=CH-CH_2-SiCl_2Me$, $Cl-CH_2CH_2CH_2-SiCl_2Me$, cy-Hex-$SiCl_2Me$, cy-Hex-$CH_2-CH_2-SiCl_2Me$, $H_2C=CH-(CH_2)_9-SiCl_2Me$, $Cl-CH_2-SiMeCl_2$, $Cl_2MeSi-CH_2CH_2-SiMeCl_2$, $Me_2SiClSiCl_3$, $Me_2SiClSiClMe_2$, $Me_2SiClSiMe_3$, $Me_2SiClSiMeCl_2$.
Bevorzugt sind $Me_2Si(OMe)_2$, $Me_2Si(OEt)_2$, $MeSi(OMe)_2CH_2CH_2CH_3$ und $Ph-Si(OMe)_2Me$, wobei $Me_2Si(OMe)_2$ und $MeSi(OMe)_2CH_2CH_2CH_3$ besonders bevorzugt sind.

Me bedeutet Methylrest, Et bedeutet Ethylrest, Ph bedeutet Phenylrest, t-Bu bedeutet 2,2-Dimethylpropylrest, cy-Hex bedeutet Cyclohexylrest, n-Hex bedeutet n-Hexylrest, Hexadecylbedeutet n-Hexadecylrest.

Vorzugsweise bedeuten a = 1 oder 2.

Obwohl chemisch keine Obergrenze für die Wassermenge existiert, wird man aus wirtschaftlichen Gründen den Wasseranteil möglichst niedrig halten, da überschüssiges Wasser wieder entfernt werden muss. Deshalb wird eine möglichst geringe Wassermenge gewählt, die gerade ausreicht, eine weitestgehend vollständige Hydrolyse zu ermöglichen, und klare bis leicht trübe Lösungen zu erhalten. Vorzugsweise beträgt der Festgehalt der Alkaliorganosiliconat-Lösungen bei einer Messung mit der Festgehaltswaage HR73 Halogen Moisture Analyzer von Mettler Toledo oder einem vergleichbaren Messgerät bei 160°C mindestens 20 Gew.-%, besonders bevorzugt mindestens 40 Gew.-%, vorzugsweise höchstens 70 Gew.-% und besonders bevorzugt höchstens 60 Gew.-%.

Bei Alkoxysilanen oder deren Hydrolyse/Kondensationsprodukten als Ausgangsmaterial wird der freigesetzte Alkohol so weit abdestilliert, dass eine Restkonzentration in den wässrigen Alkaliorganosiliconat-Lösungen von weniger als 0,02 Gew.-% insbesondere von maximal 0,01 Gew.-% Alkohol, insbesondere der Formel $HOR^4$ resultiert.

Bei Halogensilanen oder gemischten Halogen-Alkoxysilanen, insbesondere der allgemeinen Formel 1, in der **Y** F, Cl oder Br bedeutet, oder deren Hydrolyse/Kondensationsprodukten als Ausgangsmaterial werden diese vorzugsweise zuerst mit Wasser zur Organokieselsäure umgesetzt, wobei Halogenwasserstoff - gegebenenfalls neben Alkohol - insbesondere HY entsteht. Aus dieser Organokieselsäure werden mit Alkalilauge wässrige Lösungen der Alkaliorganosiliconate hergestellt. Dabei wird im ersten Schritt die Wassermenge so bemessen und die Organokieselsäure gegebenenfalls mit Wasser so oft nachgewaschen, dass eine Restkonzentration an Halogenidanionen, insbesondere **Y** in den wässrigen Alkaliorganosiliconat-Lösungen von maximal 0,3 Gew.-%, besonders bevorzugt von maximal 0,1 Gew.-% insbesondere von maximal 0,01 Gew.-% resultiert.

Eine direkte Umsetzung von Halogensilanen der allgemeinen Formel (1) mit Y = Cl, F, Br oder deren Hydrolyse/Kondensationsprodukten mit basischem Alkalisalz ist ebenfalls erfindungsgemäß aber aus wirtschaftlichen Gründen nicht bevorzugt, da der gebildete Halogenwasserstoff eine äquimolare Menge basisches Alkalisalz verbraucht, welches zusätzlich zu der für die Alkalisiliconatbildung benötigten Einsatzmenge berücksichtigt werden muss. Neben diesem Mehrverbrauch an basischem Alkalisalz verringert sich die Wirtschaftlichkeit durch zwei weitere Effekte: der nicht abtrennbare Anteil an gebildetem Alkalihalogenid-Salz hat keine hydrophobierende Wirkung und verringert somit die Effizienz des Alkalisiliconats als Hydrophobiermittel, der Halogenwasserstoff, vorzugsweise HY wird nicht zurückgewonnen und geht damit dem Herstellprozess verloren.

Aufgrund des annähernd vollständigen Recyclings der Spaltprodukte, insbesondere HCl und Methanol, eignet sich für die Herstellung wässriger Lösungen von Alkaliorganosiliconaten besonders das in DE 4336600 beschriebene kontinuierliche Verfahren, bei dem ein Organoalkoxysilan, insbesondere der allgemeinen Formel 1, bei dem **Y** = $OR^4$ mit wässriger Alkalilauge unter Freisetzung von Alkohol, insbesondere $HOR^4$ direkt zur wässrigen Alkaliorganosiliconatlösung umgesetzt wird.

Die basischen Alkalisalze weisen vorzugsweise einen $pk_B$ Wert von höchstens 12, besonders bevorzugt höchstens 10, insbesondere höchstens 5 auf. Als basische Alkalisalze werden Verbindungen eingesetzt, die in Wasser solvatisierte Hydroxidionen bilden und als Kationen Alkaliionen enthalten. Als Alkalisalze werden vorzugsweise die Alkalihydroxide, wie Lithiumhydroxid, Natriumhydroxid, Kaliumhydroxid und Cesiumhydroxid eingesetzt, besonders bevorzugt Natriumhydroxid und Kaliumhydroxid. Weitere Beispiele für Alkalisalze sind Alkalicarbonate, wie Natriumcarbonat und Kaliumcarbonat sowie Alkalihydrogencarbonate wie Natriumhydrogencarbonat, Alkaliformiate wie Kaliumformiat, Alkalisilikate (Wasserglas) wie Natriumorthosilikat, Dinatriummetasilikat, Dinatriumdisilikat, Dinatriumtrisilikat oder Kaliumsilikat. Desweiteren können auch Alkalimetalle direkt, Alkalioxide, Alkaliamide oder Alkalialkoholate eingesetzt werden, vorzugsweise diejenigen, die denselben Alkohol freisetzen wie die eingesetzten Verbindungen der allgemeinen Formel 1.
Es können auch Gemische verschiedener Salze gegebenenfalls unterschiedlicher Alkalimetalle eingesetzt werden, beispielsweise Mischungen aus Natriumhydroxid und Kaliumhydroxid. Typische Nebenbestandteile in technischen Qualitäten der basischen Salze (d.h. bei Reinheiten zwischen 80 und 99 Gew.-%) wie Wasser oder andere Salzanteile, z.B. Natriumanteile in Kaliumsalzen oder Carbonate in Hydroxiden, stören in der Regel nicht und können toleriert werden.
Eine weitere bevorzugte Variante ist der Einsatz von Alkaliorganosiliconaten, insbesondere wässriger oder wässrigalkoholischer Zubereitungen von Alkaliorganosiliconaten gegebenenfalls im Gemisch mit anderen Alkalisalzen vorzugsweise Alkalihydroxiden. Dies ist gegebenenfalls vorteilhaft, wenn das Siliconat oder die wässrige oder auch wässrigalkoholische Siliconatzubereitung (Lösung, Suspension, Emulsion) z.B. als Verkaufsprodukt bereits in großen Mengen hergestellt wird, sodass lediglich ein weiterer Reaktionsschritt benötigt wird, die Pulver (P) herzustellen. Beispielsweise kann eine Verbindung der allgemeinen Formel 1 mit einer wässrigen Lösung eines Kaliummethylsiliconats (z.B. WACKER SILRES® BS 16) umgesetzt werden. Unter den bevorzugten Verbindungen der allgemeinen Formel 1, die mit kommerziell erhältlichen Alkalimethylsiliconaten umgesetzt werden, sind (insofern die Verbindung die allgemeine Formel 1 gemäß Anspruch 1 aufweist) MeSi(OMe)$_3$, Et-Si(OMe)$_3$, Ph-Si(OMe)$_3$, Propyl-Si(OMe)$_3$, Butyl-Si(OMe)$_3$, Hexyl-Si(OMe)$_3$, Octyl-Si(OMe)$_3$, Vinyl-Si(OMe)$_3$ sowie deren mögliche Konstitutions- oder Stereoisomere, wobei Me für den Methylrest, Et für den Ethylrest, Ph für den Phenylrest, Propyl für einen 1-Propyl- oder einen 2-Propylrest steht, Butyl für einen n-Butyl- oder einen verzweigten Butylrest, Octyl für einen n-Octyl- oder einen verzweigten oder cyclische Strukturen aufweisenden Octylrest, Hexyl für einen n-Hexyl- oder einen verzweigten oder cyclische Strukturen aufweisenden Hexylrest stehen, die jeweils an einem beliebigen C-Atom an Si gebunden sind und Vinyl für einen Vinylrest steht. Dieser Weg ist besonders vorteilhaft, wenn Siliconat-Pulver hergestellt werden sollen, die neben Methylresten noch andere Reste $R^1$ und $R^2$ enthalten.

Die erfindungsgemäße Entfernung des Wassers aus der wässrigen Akaliorganosiliconat-Lösung, auch als Trocknung bezeichnet, erfolgt durch Trocknung in einem Sprühtrockner. Die Trocknung wird an Luft oder unter Inertgas (z.B. Stickstoff, Argon, Helium, Magerluft mit maximal 2% Sauerstoff) durchgeführt. Vorzugsweise wird die Sprühtrocknung bei dem Druck der umgebenden Atmosphäre durchgeführt, sie kann aber auch unter einem gegenüber dem Atmosphärendruck verminderten oder erhöhten Druck erfolgen. Vorzugsweise liegt der Druck bei mindestens 10 hPa, besonders bevorzugt mindestens 100 hPa und bei höchstens 2000 hPa, besonders bevorzugt bei höchstens 1200 hPa absolut.

Die Sprühtrocknung kann in beliebigen zur Sprühtrocknung von Flüssigkeiten geeigneten und bereits vielfach bekannten Vorrichtungen, beispielsweise solchen mit mindestens einer Zweistoffdüse, einer Hartmetall- beziehungsweise Hohlkegeldüse oder einer Drallzerstäuberdüse oder mit einer rotierenden Zerstäuberscheibe in einem erwärmten Trockengasstrom durchgeführt werden. Vorzugsweise beträgt die Eingangstemperatur des Trockengasstroms, wobei es sich bei der sog. Sprühluft bevorzugt um Luft, Magerluft oder Stickstoff handelt, in die Sprühtrocknungs-Vorrichtung 110°C bis 350°C, besonders bevorzugt mindestens 110°C und höchstens 250°C, insbesondere mindestens 110°C und höchstens 180°C. Die Austrittstemperatur des beim Trocknen gebildeten Gasstroms beträgt vorzugsweise 40 bis 120°C, insbesondere 60 bis 110°C. Die Sprühluft kann, wenn erforderlich, um einen niedrigeren Restfeuchtegehalt zu erzeugen, auf Temperaturen bis 250 °C, bevorzugt zwischen 40 und 200 °C, besonders bevorzugt zwischen 50 und 150 °C erhitzt werden. Der Sprühdruck liegt vorzugsweise bei mindestens 500 hPa, besonders bevorzugt bei mindestens 800 hPa, höchstens bei 500 000 hPa, insbesondere höchstens bei 10 000 hPa. Die Umdrehung der Zerstäuberscheibe liegt vornehmlich zwischen 4000 und 50 000 U/min, wobei die individuellen Zersetzungstemperaturen für die optimale Anpassung der Sprühparameter herangezogen werden müssen. Ein großer Vorteil des Sprühtrocknungsverfahrens ist, dass aufgrund des geringen Volumens im heißen Düsenbereich sicherheitskritische Zustände selbst im Temperaturbereich der thermischen Zersetzung nicht zu erwarten sind. Zu hohe Temperaturen/Verweilzeiten äußern sich aufgrund einer Abspaltung der Reste $R^1$, $R^2$ in einer verringerten Hydrophobierwirkung des getrockneten Alkaliorganosiliconats, was vom Fachmann einfach zu überprüfen und zu korrigieren ist. Vorzugsweise wird das Sprühtrocknen in einem Sprühtrockner umgesetzt. Die Sprühtrocknung kann dabei so durchgeführt werden, dass die Kornbildung direkt aus der wässrigen Alkaliorganosiliconat-Lösung erfolgt oder indem eine Wirbelschicht aus bereits vorher getrockneter Alkaliorganosiliconat-Löung vorgelegt wird, auf die die Alkaliorganosiliconat-Lösung aufgesprüht wird. Parallel zu der Alkaliorganosiliconat-Lösung können noch weitere Flüssigkeiten wie Lösungsmittel, vorzugsweise Wasser oder Alkohole oder Tenside in den Trockner eingespeist werden, z.B. um das Sprühbild durch Oberflächeneffekte zu verändern.

Den wässrigen Lösungen von Alkaliorganosiliconaten können vor der Sprühtrocknung noch weitere Bestandteile z.B. zur Verbesserung der Anwendungseigenschaften des Feststoffs (F) zugesetzt werden. Zur Verbesserung und dem Erhalt der Rieselfähigkeit können Rieselhilfen und/oder Antibackmittel zugesetzt werden. Auch Bestandteile aus der mit dem Feststoff (F) herzustellenden Baustoffabmischung wie beispielsweise Gips, Zement, Sand, Glas, oder Füllstoffe wie Kreiden, Silikate, Tone, Kieselsäuren, Metalloxide, Polymere (beispielsweise PVA, PVC, PE, PP, Polystyrol, PTFE, PVDF in Pulverform oder als Pellets) sowie Abbindeverzögerer oder -Beschleuniger aber auch flüssige Polymere wie Mineralöle oder Siliconöle können zu Beginn, während oder am Ende des Herstellprozesses zugesetzt werden.

Vorzugsweise werden bezogen auf 100 Gewichtsteile von Alkaliorganosiliconaten höchstens 50, besonders bevorzugt höchstens 10 Gewichtsteile weitere Bestandteile zugesetzt.

Der getrocknete Feststoff (F) wird über gängige Auschleuseorgane wie getaktete Schleusen, Zellradschleusen oder Zyklone zu den angeschlossenen Prozessapparaten (beispielsweise Mühlen, Sichter, Siebe) oder Lager- oder Transportbehältern (beispielsweise Silos, Container, Bigbags, Säcke, Fässer, Hobbocks) ausgetragen. Diese können gekühlt oder beheizt sein, um den festen Feststoff (F) auf die jeweils gewünschte Temperatur zu bringen.

Der Feststoff (F) weist vorzugsweise einen bei 160°C mittels Festgehaltswaage HR73 Halogen Moisture Analyzer von Mettler Toledo oder einem vergleichbaren Messgerät bestimmten Festgehalt von mindestens 96 Gew.-%, besonders bevorzugt von mindestens 98 Gew.-%, insbesondere mindestens 99 Gew.-% auf. Er enthält höchstens 2 Gew.-%, vorzugsweise höchstens 0,5 Gew.-%, insbesondere höchstens 0,1 Gew.-% Halogenidionen bestimmbar mittels Elementaranalyse. Er besitzt einen Alkoholgehalt von vorzugsweise höchstens 0,2 Gewichtsprozent, bevorzugt höchstens 0,1 Gewichtsprozent, besonders bevorzugt höchstens 0,05 Gewichtsprozent, außerordentlich bevorzugt höchstens 0,01 Gew.-% und insbesondere höchstens 0,005 Gew.-%. Der Alkoholgehalt umfasst dabei sowohl den chemisch gebundenen als auch adsorbierten Alkohol. Er wird vorzugsweise an einer Lösung des Pulvers NMR-spektroskopisch ermittelt. Dabei kann der Zusatz von Base, vorzugsweise Alkalihydroxid, nützlich sein, um die Löslichkeit zu gewährleisten. Als Bezugsgrößen dienen dabei die Gewichtsanteile aller Siloxy-Einheiten $(R^1)_a Si(O_{1/2})_b[(-Si(R^2)_{3-c}(O_{1/2})_c]_d$ die sich aus der Formel 1 ergeben, beispielsweise $(R^1)_a Si(O_{1/2})_b[(-Si(R^2)_{3-c}(O_{1/2})_c]_d$ oder $(R^1)_a Si(O_{1/2})_b$, sowie die Gewichtsanteile der Alkoxy-Einheiten $R^4 O_{1/2}$ und die Gewichtsanteile des freien Alkohols $R^4 OH$. Die Ermittlung des Alkoholgehalts erfolgt dabei vorzugsweise auf Basis der aus dem $^1$H-NMR-Spektrum zu entnehmenden Molprozente der genannten Fragmente und ihrer Molmassen, wobei die Massen/Gewichtsanteile der vorhandenen Fragmente $R^4 O_{1/2}$ und des freien Alkohols $R^4 OH$ aufaddiert werden und ihre Summe als Alkoholgehalt angegeben wird.

Die Korngrößenverteilung kann in gewissen Grenzen durch die Sprühtrocknungsparameter beeinflusst werden. Generell zeichnen sich die erfindungsgemäß hergestellten Feststoffe (F) durch eine ausgezeichnete Rieselfähigkeit aus.

Die Schüttdichte liegt vorzugsweise unterhalb von 700 g/l, besonders bevorzugt unterhalb von 600 g/l, insbesondere unterhalb von 500 g/l.

Gegenstand der Erfindung sind auch Feststoffe (F), herstellbar durch das vorstehende Verfahren, die damit ausgestatteten Baustoffmischungen, zu denen beispielsweise gips- oder zementbasierte Trockenmörtel, Putze, Spachtelmassen, Feinspachtelmassen, Selbstverlaufsmassen, Ortbeton und Spritzbeton zählen sowie daraus hergestellte Bauteile und Formkörper.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 1000 hPa (abs.) durchgeführt.

Der Festgehalt wird jeweils mit der Festgehaltswaage HR73 Halogen Moisture Analyzer von Mettler Toledo bei 160°C bestimmt. Der Methoxy/Methanolgehalt wurde mittels $^1$H-NMR-Spektroskopie wie oben beschrieben ermittelt.

**Herstellungsbeispiel 1 (erfindungsgemäß): Trocknung einer wässrigen Lösung von Kaliummethylsiliconat (WACKER SILRES® BS16 Wacker Chemie AG) durch Sprühtrocknung**

In einem Wirbelschicht-Sprühtrockner GPCG 3.1 der Firma Glatt wird eine käuflich erhältliche Lösung von Kaliummethylsiliconat (WACKER SILRES® BS 16) bei einer Zulufttemperatur von 140-145°C mittels einer geraden 1,6 mm Zweistoffdüse von oben in die Sprühkammer bei einem Druck von 2.000 hPa versprüht. Die Sprühlufttemperatur beträgt 100-105°C, die Ablufttemperatur 95-80°C. Man isoliert ein weißes rieselfähiges Pulver mit einem Festgehalt von 96,71 Gew.-% und einer Schüttdichte von 480 g/l. Aufgrund seiner maximalen Korngröße von 200 $\mu$m ist es für die Anwendung als Drymix-Hydrophobieradditiv ohne weitere Mahl- oder Klassierschritte geeignet. Außerdem zeigt es ein überraschend geringes hygroskopisches Verhalten, sodass es selbst nach einigen Stunden an Luft seine ausgezeichnete Rieselfähigkeit behält. Laut Partikelgrößenanalyse (Sympatec Helos-Partikelgrößenanalyse, Dispersiondruck im Trockendispergierer: 4 bar) sind 100% aller Partikel kleiner als 174 $\mu$m, 99% aller Partikel kleiner als 130,70 $\mu$m, 90% aller Partikel kleiner als 38,00 $\mu$m, 50% aller Partikel kleiner als 9,04 $\mu$m und 10% aller Partikel kleiner als 1,78 $\mu$m. Das Maximum der Verteilungsdichte liegt bei 10 $\mu$m. Unter 1,80 $\mu$m sind 10,18 % aller Partikel. Die Elementaranalyse ergibt einen Kaliumgehalt von 30g/100g Pulver und einen Siliciumgehalt von 21g/100g Pulver, was folgende mittlere Formel für das Kaliummethylsiliconat nahelegt: $H_3 C\text{-}Si(OH)_{1,9744}(OK)_{1,0256}$.

**Vergleichsbeispiel 1 (nicht erfindungsgemäß): Trocknung einer wässrigen Lösung von Kaliummethylsiliconat (WACKER SILRES® BS 16 Wacker Chemie AG durch Trocknung an einem Pulverbett (gemäß WO2013/075969)**

In einem horizontalen, mit Wärmeträgeröl beheizten Schaufeltrockner (Edelstahlzylinder, Länge 2.200 mm, Durchmesser 380 mm, mit kranzförmig an dem zentralen Rotor angeordneten Wischer- und Förderelementen) wird bei einer Drehzahl von 300 Min$^{-1}$, einer Manteltemperatur von 190°C und 87 hPa kontinuierlich eine käuflich erhältliche Lösung von Kaliummethylsiliconat (WACKER SILRES® BS 16, Wacker Chemie AG) auf ein Pulverbett aus getrocknetem Kaliummethylsiliconat dosiert. Die flüchtigen Bestandteile werden dabei über zwei Dome zu einem liegenden, mit Kühlwasser betriebenen Rohrbündelwärmetauscher geführt und dort auskondensiert. Am Ende des Schaufeltrockners wird das getrocknete Pulver über eine getaktete Feststoffschleuse ausgetragen.

Durch Drehzahl und Dosiergeschwindigkeit ergibt sich eine mittlere Verweilzeit in der Trocknungsanlage von etwa 6 Minuten. Man isoliert ein weißes rieselfähiges Pulver mit einem Festgehalt von 98,49 Gew.-% und einer Schüttdichte von 870 g/l. Aufgrund der Anwesenheit grober Partikel mit bis zu 1 mm Durchmesser muss das Pulver für die Anwendung als Drymix-Hydrophobieradditiv aufgemahlen werden. Erst nach Mahlen und Sichten liegen die Partikelgrößen im anwendungskonformen Bereich. Laut Partikelgrößenanalyse (Sympatec Helos-Partikelgrößenanalyse, Dispersiondruck im Trockendispergierer: 4 bar) sind 100% aller Partikel kleiner als 174 $\mu$m, 99% aller Partikel kleiner als 137,51 $\mu$m, 90% aller Partikel kleiner als 50,90 $\mu$m, 50% aller Partikel kleiner als 6,20 $\mu$m und 10% aller Partikel kleiner als 1,07 $\mu$m. Unter 1,80 $\mu$m sind 22,86 % aller Partikel. Daraus folgt, dass im Vergleich zum erfindungsgemäßen Herstellungsbeispiel 1 durch das Mahlen und Sichten beim nicht erfindungsgemäßen Vergleichsbeispiel 1 ein deutlich höherer Feinstaubanteil entsteht, der aus gesundheitlichen Gründen in der Anwendung einen weiteren Nachteil darstellt. Das Maximum der Verteilungsdichte liegt bei 12 $\mu$m.

**Anwendungsbeispiele 1 und 2: Hydrophobierung eines kommerziellen Strukturgipsputzes mit dem Kalium-Methylsiliconatpulver aus Herstellungsbeispiel 1 und Vergleichsbeispiel 1 (Molverhältnis Alkali-Metall zu Silicium: 1,04)**

Tabelle 1 zeigt im Falle der Anwendungsbeispiele 1 und 2, dass das Kalium-Methylsiliconat-Pulver aus Herstellungsbeispiel 1 die 2-h-Wasseraufnahme bei einer Dosierung von 0,20 Gew.-% deutlich stärker reduziert, als das Kalium-Methylsiliconat-Pulver aus Vergleichsbeispiel 1 (nicht erfindungsgemäß).

In den Anwendungsbeispielen wurde der marktübliche Strukturgipsputz in Pulverform eingesetzt. Dem Trockenmörtel wurden jeweils 0,20 Gew.-% an Kalium-Methylsiliconat-Pulver aus Herstellungsbeispiel 1 (erfindungsgemäß) und Vergleichsbeispiel 1 (nicht erfindungsgemäß) in trockener Form zugesetzt und die Mischungen wurden effektiv in einem sog. Planetenmischer, wie in EN 196-1 beschrieben, für 30 Sekunden vermischt. Anschließend wurde diese Trockenmischung gemäß der auf der Packung angegebenen Rezeptur unter Rühren portionsweise zum Anmachwasser gegeben und mit dem Planetenmischer, wie in EN 196-1 beschrieben, zu einem homogenen Slurry verrührt (gemäß Packungsangabe: 300 g Pulver und 200 g Wasser). Anschließend wurde der erhaltene Slurry in PVC-Ringe (Durchmesser: 80 mm, Höhe 20 mm) gegossen und das Abbinden des Gipsputzes bei 23 °C und 50 % relativer Luftfeuchte über 24 Stunden abgewartet. Nach der Entschalung der Gipsprüfkörper aus den Ringen wurde in einem Umlufttrockenschrank bei 40 °C bis zur Gewichtskonstanz der Prüfkörper getrocknet. Zur Bestimmung der Wasseraufnahme in Anlehnung an DIN EN 520 wurden die Prüfkörper nach Bestimmung des Trockengewichts für 120 min unter Wasser gelagert, wobei die Proben horizontal auf Metallgitter gelegt wurden und der Wasserüberstand über dem höchsten Punkt der Prüfkörper 5 mm betrug. Nach 120 min wurden die Prüfkörper aus dem Wasser genommen, auf einem mit Wasser gesättigten Schwamm abgetropft und auf einer Waage mit einer Genauigkeit von 0,01 g aus dem Nassgewicht sowie dem Trockengewicht die prozentuale Wasseraufnahme nach 120 min gemäß der Formel

$$\text{Prozentuale Wasseraufnahme} =$$

$$\{[\text{Masse(nass)} - \text{Masse(trocken)}]/\text{Masse(trocken)}\} \cdot 100\ \%$$

errechnet.

**Tabelle 1: Vergleich der Eigenschaften von erfindungsgemäß spühgetrocknetem und am Pulverbett getrocknetem WACKER SILRES® BS16**

| | nach WO2013/075969 (nicht erfindungsgemäss am Pulverbett getrocknet) | Erfindungsgemäß (sprühgetrocknet) |
|---|---|---|
| Korngrößenverteilung, obere Grenze X100 | 1000 $\mu$m | 200 $\mu$m |
| Hygroskopische Gewichtszunahme nach 20 Stunden bei 23°C/50% relativer Luftfeuchtigkeit | 37,9% | 32, 3% |
| Aggregatzustand nach 48 Stunden bei 23°C/ 50% relativer Luftfeuchtigkeit | flüssig | fest, körnig, rieselfähig |
| Pulver-Ausbreitmaß (Rieselfähigkeit)*) | 90 mm | 101 mm |
| Wasseraufnahme Gipsputz**) | 16,9% | 1,59% |
| *) Durchmesser des Ausbreitungskegels nach Anheben eines mit Pulver bis zum oberen Rand lose befüllten Zylinders von 35mm Innendurchmesser und 51 mm Höhe (nicht kompaktiert) **) Zusatz von 0,20 Gew.-% Pulver zu einem handelsüblichen Strukturgipsputz; Wasseraufnahme ohne Hydrophobieradditiv: 37,4% | | |

**Patentansprüche**

1. Verfahren zur Herstellung von pulverförmigen Feststoffen (F), die Alkaliorganosiliconate umfassen, bei dem wässrige Lösungen der Alkaliorganosiliconate hergestellt werden durch Reaktion von einem oder mehreren Organosilanen der allgemeinen Formel 1

$$(R^1)_a Si(Y)_b (-Si(R^2)_{3-c}(Y)_c)_d \qquad (1)$$

oder deren Hydrolyse/Kondensationsprodukten, oder durch Reaktion der Organosilane der allgemeinen Formel 1 zusammen mit deren Hydrolyse/Kondensationsprodukten,
mit Wasser und basischem Alkalisalz und Entfernung der freigesetzten Spaltprodukte **HY,**
wobei

$R^1$, $R^2$ jeweils einen Methylrest,
Y Wasserstoff, F, Cl, Br oder O$R^4$ und
$R^4$ Methyl-, Ethyl-, 1-Propyl- oder 2-Propylgruppe, bedeuten,
a die Werte 1, 2 oder 3 und
b, c, d die Werte 0, 1, 2 oder 3 bedeuten,

mit der Maßgabe, dass b+c $\geq$ 1 und a+b+d = 4,
wobei die Menge an basischem Alkalisalz so bemessen ist, dass auf ein Mol Silicium mindestens 0,1 Mol und höchstens 3 Mol Alkali-Kationen kommen,
bei dem das Wasser aus den wässrigen Lösungen von Alkaliorganosiliconaten mit einem Molverhältnis von Alkali zu Silicium von 0,1 bis 3, einem Gehalt an Alkoholen von weniger als 0,02 Gew.-% und einem Gehalt an Halogenidanionen von maximal 1 Gew.-% durch Sprühtrocknung entfernt wird.

2. Verfahren nach Anspruch 1, bei dem die basischen Alkalisalze ausgewählt werden aus Alkalihydroxiden, Alkalisilikaten, Alkaliorganosiliconaten und deren Gemischen.

3. Verfahren nach einem oder mehreren der vorangehenden Ansprüche, bei dem das Wasser bis zu einem bei 160°C bestimmten Festgehalt von mindestens 96 Gew.-% des Feststoffs (F) entfernt wird.

4. Verfahren nach einem oder mehreren der vorangehenden Ansprüche, bei dem der Alkoholgehalt des Feststoffs (F) auf höchstens 0,05 Gew.-% eingestellt wird.

**Claims**

1. Process for producing pulverulent solids (S) comprising alkali metal organosiliconates, wherein aqueous solutions of the alkali metal organosiliconates are prepared by reaction of one or more organosilanes of the general formula 1

$$(R^1)_a Si(Y)_b (-Si(R^2)_{3-c}(Y)_c)_d \qquad (1)$$

or hydrolysis/condensation products thereof, or by reaction of the organosilanes of the general formula 1 together with hydrolysis/condensation products thereof,
with water and a basic alkali metal salt and removal of the dissociation products **HY** liberated,
where

$R^1$, $R^2$ are each a methyl radical,
Y is hydrogen, F, Cl, Br or O$R^4$ and
$R^4$ is a methyl, ethyl, 1-propyl or 2-propyl group,
a is 1, 2 or 3 and
b, c, d are each 0, 1, 2 or 3,

with the proviso that b+c $\geq$ 1 and a+b+d = 4,
where the amount of basic alkali metal salt is such that there is at least 0.1 mol and not more than 3 mol of alkali metal cations per 1 mol of silicon, wherein the water is removed from the aqueous solutions of alkali metal organosiliconates having a molar ratio of alkali metal to silicon of from 0.1 to 3, a content of alcohols of less than 0.02% by weight and a content of halide anions of not more than 1% by weight by spray drying.

2. Process according to Claim 1, wherein the basic alkali metal salts are selected from among alkali metal hydroxides, alkali metal silicates, alkali metal organosiliconates and mixtures thereof.

3. Process according to one or more of the preceding claims, wherein the water is removed to a solids content determined at 160°C of at least 96% by weight of the solid (S).

4. Process according to one or more of the preceding claims, wherein the alcohol content of the solid (S) is set to not more than 0.05% by weight.


**Revendications**

1. Procédé pour la préparation de solides pulvérulents (F), qui comprennent des organosiliconates d'alcali, dans lequel des solutions aqueuses des organosiliconates d'alcali sont préparées par réaction d'un ou plusieurs organosilanes de formule générale 1

$$(R^1)_a Si(Y)_b(-Si(R^2)_{3-c}(Y)_c)_d \qquad (1)$$

ou de leurs produits d'hydrolyse/de condensation, ou par réaction des organosilanes de formule générale 1 conjointement avec leurs produits d'hydrolyse/de condensation,
avec de l'eau et un sel d'alcali basique et élimination des produits de clivage libérés HY,

$R^1$, $R^2$ étant à chaque fois un radical méthyle,
Y signifiant hydrogène, F, Cl, Br ou $OR^4$ et
$R^4$ signifiant un groupe méthyle, éthyle, 1-propyle ou 2-propyle,
a valant 1, 2 ou 3 et
b, c, d valant 0, 1, 2 ou 3,

étant entendu que $b + c \geq 1$ et $a + b + d = 4$,
la quantité de sel d'alcali basique étant mesurée de telle façon pour une mole de silicium, au moins 0,1 mole et au plus 3 moles de cations d'alcali sont engagées,
dans lequel l'eau est éliminée des solutions d'organosiliconates d'alcali dotés d'un rapport molaire d'alcali à silicium de 0,1 à 3, d'une teneur en alcools inférieure à 0,02 % en poids et d'une teneur en anions halogénure d'au maximum 1 % en poids, par séchage par pulvérisation.

2. Procédé selon la revendication 1, dans lequel les sels d'alcali basiques sont choisis parmi des hydroxydes d'alcali, des silicates d'alcali, des organosiliconates d'alcali et leurs mélanges.

3. Procédé selon l'une ou plusieurs des revendications précédentes, dans lequel l'eau est éliminée jusqu'à une teneur en solides déterminée à 160 °C d'au moins 96 % en poids du solide (F).

4. Procédé selon l'une ou plusieurs des revendications précédentes, dans lequel la teneur en alcool du solide (F) est ajustée à au plus 0,05 % en poids.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2803561 A
- DE 4336600
- WO 2013174689 A
- US 2438055 A
- DE 1176137
- US 2567110 A
- WO 2013041385 A
- WO 2013075969 A
- WO 12022544 A